# EUROPÄISCHE PATENTSCHRIFT

(11) **EP 2 680 996 B1**
(45) Veröffentlichungstag und Bekanntmachung des Hinweises auf die Patenterteilung: **04.11.2020**
(21) Anmeldenummer: 12717041.3
(22) Anmeldetag: 02.03.2012
(51) Int. Cl.: B23D 57/02, B27B 17/00, B28D 1/08

(54) **WERKZEUGMASCHINENSYSTEM**
POWER TOOL SYSTEM
SYSTÈME DE MACHINE-OUTIL

(30) Priorität: 03.03.2011 DE 102011005020
(43) Veröffentlichungstag der Anmeldung: 08.01.2014
(73) Patentinhaber: Robert Bosch GmbH, 70442 Stuttgart (DE)
(72) Erfinder: FUCHS, Rudolf, 73765 Neuhausen (DE)
(86) Internationale Anmeldenummer: PCT/EP2012/000955
(87) Internationale Veröffentlichungsnummer: WO 2012/116843

(56) Entgegenhaltungen:
- DE-A1- 3 438 361
- DE-A1- 3 438 361
- DE-C- 690 791
- DE-C- 690 791
- DE-U1- 29 810 050
- FR-A1- 2 610 563
- FR-A1- 2 610 563
- GB-A- 2 042 974
- GB-A- 2 042 974
- US-A- 2 348 612
- US-A- 2 348 612
- US-A- 2 992 660
- US-A- 2 992 660
- US-A- 4 458 569
- US-A- 4 757 735
- US-A- 4 757 735
- US-A- 4 779 503
- US-A- 4 779 503
- US-B1- 6 370 997

## Beschreibung

### Stand der Technik

Es sind bereits Werkzeugmaschinensysteme bekannt, die eine Werkzeugmaschine und eine Werkzeugmaschinentrennvorrichtung umfassen. Die Werkzeugmaschine weist hierbei eine Werkstückauflageeinheit zur Auflage eines Werkstücks während einer Bearbeitung auf, durch die sich die Werkzeugmaschinentrennvorrichtung in zumindest einem Betriebszustand hindurch erstreckt. Ein Werkzeugmaschinesystem gemäß dem Oberbegriff des Anspruchs 1 ist aus US4458569A bekannt.

### Offenbarung der Erfindung

Die Erfindung geht aus von einem Werkzeugmaschinensystem mit zumindest einer Werkzeugmaschine, die zumindest eine Werkstückauflageeinheit zur Auflage eines Werkstücks während einer Bearbeitung umfasst, und mit zumindest einer sich in zumindest einem Betriebszustand durch die Werkzeugauflageeinheit hindurch erstreckende Werkzeugmaschinentrennvorrichtung.

Es wird vorgeschlagen, dass die Werkzeugmaschinentrennvorrichtung zumindest einen Schneidstrang und zumindest eine Führungseinheit zur Führung des Schneidstrangs aufweist. Besonders bevorzugt ist die Werkzeugmaschine als Tischsäge, als Unterflursäge und/oder als Unterflurkappsäge ausgebildet. Es ist jedoch auch denkbar, dass die Werkzeugmaschine eine andere, einem Fachmann als sinnvoll erscheinende Ausgestaltung aufweist. Die Werkzeugmaschine weist insbesondere eine Masse auf, die kleiner ist als 60 kg, bevorzugt kleiner als 40 kg und besonders bevorzugt kleiner als 30 kg. Vorzugsweise ist die Werkzeugmaschine als stationäre Werkzeugmaschine ausgebildet, die von einem Bediener transportmaschinenlos transportiert werden kann. Unter einer "Werkstückauflageeinheit" soll hier insbesondere eine Einheit verstanden werden, die dazu vorgesehen ist, ein Werkstück zu einer Bearbeitung bei einer ordnungsgemäßen Handhabung der Werkzeugmaschine aufzunehmen und die zumindest ein Anschlagelement, insbesondere eine Anschlagschiene, aufweist, an der das Werkstück zu einer Erzielung eines präzisen Schnitts bei einer Bearbeitung angelegt werden kann. Insbesondere wird ein Werkstück zu einer Bearbeitung mittels der Werkzeugmaschine auf die Werkstückauflageeinheit aufgelegt und/oder aufgespannt. Besonders bevorzugt wird die Werkstückauflageeinheit von einem Werkzeugmaschinentisch, insbesondere von einer Werkzeugmaschinentischplatte, gebildet. Hierbei ist die Werkstückauflageeinheit insbesondere aus Aluminium gebildet. Es ist jedoch auch denkbar, dass die Werkstückauflageeinheit aus einem anderen, einem Fachmann als sinnvoll erscheinenden Werkstoff ausgebildet ist. Der Ausdruck "hindurch erstrecken" soll hier insbesondere eine Anordnung eines Bauteils relativ zu einem weiteren Bauteil definieren, wobei das Bauteil in zumindest einem Betriebszustand in einer Ausnehmung des weiteren Bauteils angeordnet ist und sich in zumindest einem Betriebszustand über einen die Ausnehmung begrenzenden Randbereich des weiteren Bauteils hinaus erstreckt.

Unter einem "Schneidstrang" soll hier insbesondere eine Einheit verstanden werden, die dazu vorgesehen ist, einen atomaren Zusammenhalt eines zu bearbeitenden Werkstücks örtlich aufzuheben, insbesondere mittels eines mechanischen Abtrennens und/oder mittels eines mechanischen Abtragens von Werkstoffteilchen des Werkstücks. Der Ausdruck "dazu vorgesehen" soll hier insbesondere speziell ausgelegt und/oder speziell ausgestattet definieren. Bevorzugt ist der Schneidstrang dazu vorgesehen, das Werkstück in zumindest zwei physikalisch voneinander getrennte Teile zu separieren und/oder zumindest teilweise Werkstoffteilchen des Werkstücks ausgehend von einer Oberfläche des Werkstücks abzutrennen und/oder abzutragen. Besonders bevorzugt wird der Schneidstrang in zumindest einem Betriebszustand umlaufend bewegt, insbesondere entlang eines Umfangs der Führungseinheit. Unter einer "Führungseinheit" soll hier insbesondere eine Einheit verstanden werden, die dazu vorgesehen ist, eine Zwangskraft zumindest entlang einer Richtung senkrecht zu einer Schneidrichtung des Schneidstrangs auf den Schneidstrang auszuüben, um eine Bewegungsmöglichkeit des Schneidstrangs entlang der Schneidrichtung vorzugeben. Bevorzugt weist die Führungseinheit zumindest ein Führungselement auf, insbesondere eine Führungsnut, durch das der Schneidstrang geführt wird. Bevorzugt ist der Schneidstrang, in einer Schneidebene betrachtet, entlang eines gesamten Umfangs der Führungseinheit durch die Führungseinheit mittels des Führungselements, insbesondere der Führungsnut, geführt. Vorzugsweise ist die Führungseinheit als Schwert ausgebildet. Der Begriff "Schwert" soll hier insbesondere eine geometrische Form definieren, die, in der Schneidebene betrachtet, eine in sich geschlossene Außenkontur aufweist, die zumindest zwei zueinander parallel verlaufende Geraden und zumindest zwei jeweils sich zugewandte Enden der Geraden miteinander verbindende Verbindungsabschnitte, insbesondere Kreisbögen, umfasst. Somit weist die Führungseinheit eine geometrische Form auf, die sich, in der Schneidebene betrachtet, aus einem Rechteck und zumindest zwei an sich gegenüberliegenden Seiten des Rechtecks angeordneten Kreissektoren zusammensetzt.

Der Begriff "Schneidebene" soll hier insbesondere eine Ebene definieren, in der der Schneidstrang in zumindest einem Betriebszustand entlang eines Umfangs der Führungseinheit in zumindest zwei zueinander entgegengesetzt gerichtete Schneidrichtungen relativ zur Führungseinheit bewegt wird. Bevorzugt ist die Schneidebene bei einer Bearbeitung eines Werkstücks zumindest im Wesentlichen quer zu einer bearbeitenden Werkstückoberfläche ausgerichtet. Unter "zumindest im Wesentlichen quer" soll hier insbesondere eine Ausrichtung einer Ebene und/oder einer Richtung relativ zu einer weiteren Ebene und/oder einer weiteren Richtung verstanden werden, die bevorzugt von einer parallelen Ausrichtung der Ebene und/oder der Richtung relativ zu der weiteren Ebene und/oder der weiteren Richtung abweicht. Es ist jedoch auch denkbar, dass die Schneidebene bei einer Bearbeitung eines Werkstücks zumindest im Wesentlichen parallel zu einer bearbeitenden Werkstückoberfläche ausgerichtet ist, insbesondere bei einer Ausbildung des Schneidstrangs als Schleifmittel usw.
Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Schneidrichtung" soll hier insbesondere eine Richtung verstanden werden, entlang der der Schneidstrang zur Erzeugung eines Schneidspalts und/oder zur Abtrennung und/oder zur Abtragung von Werkstoffteilchen eines zu bearbeitenden Werkstücks in zumindest einem Betriebszustand infolge einer Antriebskraft und/oder eines Antriebsmoments, insbesondere in der Führungseinheit, bewegt wird. Bevorzugt wird der Schneidstrang in einem Betriebszustand entlang der Schneidrichtung relativ zur Führungseinheit bewegt. Der Schneidstrang und die Führungseinheit bilden vorzugsweise zusammen ein geschlossenes System. Der Begriff "geschlossenes System" soll hier insbesondere ein System definieren, das zumindest zwei Komponenten umfasst, die mittels eines Zusammenwirkens in einem demontierten Zustand des Systems von einem dem System übergeordneten System, wie beispielsweise einer Werkzeugmaschine, eine Funktionalität beibehalten und/oder die im demontierten Zustand unverlierbar miteinander verbunden sind. Bevorzugt sind die zumindest zwei Komponenten des geschlossenen Systems für einen Bediener zumindest im Wesentlichen unlösbar miteinander verbunden. Unter "zumindest im Wesentlichen unlösbar" soll hier insbesondere eine Verbindung von zumindest zwei Bauteilen verstanden werden, die lediglich unter der Zuhilfenahme von Trennwerkzeugen, wie beispielsweise einer Säge, insbesondere einer mechanischen Säge usw., und/oder chemischen Trennmitteln, wie beispielsweise Lösungsmittel usw., voneinander trennbar sind. Mittels der erfindungsgemäßen Ausgestaltung kann vorteilhaft ein kompaktes Werkzeugmaschinensystem erreicht werden.

Des Weiteren wird vorgeschlagen, dass die Werkzeugmaschinentrennvorrichtung in einem montierten Zustand zumindest relativ zur Werkstückauflageeinheit beweglich gelagert ist. Der Ausdruck "beweglich gelagert" soll hier insbesondere eine Lagerung der Werkzeugmaschinentrennvorrichtung, insbesondere der Führungseinheit zusammen mit dem Schneidstrang, in einem montierten Zustand an und/oder in der Werkzeugmaschine definieren, wobei die Werkzeugmaschinentrennvorrichtung, insbesondere entkoppelt von einer elastischen Verformung der Werkzeugmaschinentrennvorrichtung, eine Bewegungsmöglichkeit entlang zumindest einer Strecke größer als 10 mm, bevorzugt größer als 20 mm und besonders bevorzugt größer als 50 mm aufweist und/oder eine Bewegungsmöglichkeit um zumindest eine Achse um einen Winkel größer als 15°, bevorzugt größer als 30° und besonders bevorzugt größer als 40° aufweist. Besonders bevorzugt ist die Führungseinheit zusammen mit dem an der Führungseinheit angeordneten Schneidstrang in einem montierten Zustand zumindest relativ zur Werkstückauflageeinheit beweglich gelagert. Insbesondere ist die Werkzeugmaschinentrennvorrichtung infolge der beweglichen Lagerung stufenlos zur Werkstückauflageeinheit verstellbar. Es kann vorteilhaft ein Anpassung einer Position der Werkzeugmaschinentrennvorrichtung an eine Abmessung eines auf der Werkstückauflageeinheit angeordneten Werkstücks und/oder eine Anpassung einer Position der Werkzeugmaschinentrennvorrichtung an eine vom Bediener gewünschte Schnittart und/oder Schnitttiefe erreicht werden.

Vorteilhafterweise ist die Werkzeugmaschinentrennvorrichtung in einem montierten Zustand zumindest im Wesentlichen senkrecht zu einer Auflagefläche der Werkstückauflageeinheit beweglich gelagert. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Bevorzugt weist die Werkzeugmaschine eine Verstelleinheit auf, die beispielsweise ein Zahnstangengetriebe umfasst, mittels derer eine Verstellung der Werkzeugmaschinentrennvorrichtung zumindest im Wesentlichen senkrecht zu einer Auflagefläche der Werkstückauflageeinheit erreicht werden kann. Mittels der erfindungsgemäßen Ausgestaltung kann vorteilhaft eine Schnitttiefe eines mittels der Werkzeugmaschinentrennvorrichtung in ein Werkstück einbringbaren Schnitts verstellt werden.

Ferner wird vorgeschlagen, dass die Werkzeugmaschinentrennvorrichtung in einem montierten Zustand zumindest im Wesentlichen parallel zu einer Auflagefläche der Werkstückauflageeinheit beweglich gelagert ist. Die Werkzeugmaschinentrennvorrichtung erstreckt sich hierbei bevorzugt zumindest im Wesentlichen senkrecht zur Auflagefläche der Werkstückauflageeinheit durch die Werkstückauflageeinheit hindurch. Besonders bevorzugt weist die Werkstückauflageeinheit eine Ausnehmung auf, insbesondere ein Langloch, innerhalb der sich die Werkzeugmaschinentrennvorrichtung in einem montierten Zustand infolge der beweglichen Lagerung bewegen kann. Es kann vorteilhaft eine Bewegung der Werkzeugmaschinentrennvorrichtung relativ zur Werkstückauflageeinheit zu einem Einbringen eines Schnitts in ein zu bearbeitendes Werkstück realisiert werden. Ferner kann die Werkzeugmaschinentrennvorrichtung vorteilhaft von einem Bediener auf ein Werkstück zu bewegt werden, während das Werkstück relativ zur Werkstückauflageeinheit fixiert wird, insbesondere zumindest mittels eines Anschlagelements der Werkstückauflageeinheit.

Erfindungsgemäß sind die Werkzeugmaschinentrennvorrichtung und die Werkstückauflageeinheit in einem montierten Zustand relativ zueinander schwenkbar gelagert. Erfindungsgemäß ist die Werkzeugmaschinentrennvorrichtung in einem montierten Zustand relativ zur Werkstückauflageeinheit schwenkbar gelagert. Bevorzugt verläuft eine Schwenkachse der Werkzeugmaschinentrennvorrichtung zumindest im Wesentlichen parallel zur Auflagefläche der Werkstückauflageeinheit. Bevorzugt ist die Werkzeugmaschinentrennvorrichtung ausgehend von einer Mittelstellung in zwei entgegengesetzt gerichtete Richtungen jeweils um einen Winkel größer als 15°, bevorzugt größer als 30° und besonders bevorzugt größer als 40° schwenkbar. In einer favorisierten Ausgestaltung der Erfindung ist die Werkzeugmaschinentrennvorrichtung in einem montierten Zustand zumindest relativ zur Werkstückauflageeinheit jeweils ausgehend von einer Mittelstellung schwenkbar um 45° in zwei entgegengesetzt gerichtete Richtungen gelagert. Erfindungsgemäß wird die Schneidebene des Schneidstrangs bei einer Schwenkbewegung der Werkzeugmaschinentrennvorrichtung ausgehend von einer Mittelstellung auf die Auflagefläche der Werkstückauflageeinheit zu bewegt. Unter einer "Mittelsteilung" soll hier insbesondere eine Position der Werkzeugmaschinentrennvorrichtung verstanden werden, in der die Schneidebene zumindest im Wesentlichen senkrecht zur Auflagefläche ausgerichtet ist. In einer alternativen Ausgestaltung verläuft eine Schwenkachse zumindest im Wesentlichen senkrecht zur Auflagefläche der Werkstückauflageeinheit. Es kann vorteilhaft eine hohe Flexibilität bei einer Bearbeitung eines Werkstücks mittels des erfindungsgemäßen Werkzeugmaschinensystems erreicht werden, insbesondere bezogen auf Einstellmöglichkeiten einer Position der Werkezugmaschinentrennvorrichtung zur Bearbeitung eines Werkstücks.
Zudem wird vorgeschlagen, dass die Werkzeugmaschine zumindest eine Antriebseinheit umfasst, die gemeinsam mit der Werkzeugmaschinentrennvorrichtung in einem montierten Zustand zumindest relativ zur Werkstückauflageeinheit schwenkbar gelagert ist. Bevorzugt verläuft eine Schwenkachse, um die die Antriebseinheit und die Werkzeugmaschinentrennvorrichtung gemeinsam schwenkbar gelagert sind, zumindest im Wesentlichen parallel zu einer Längsachse der Werkzeugmaschinentrennvorrichtung. Der Begriff "Antriebseinheit" soll hier insbesondere eine Einheit definieren, die dazu vorgesehen ist, Kräfte und/oder Drehmomente zu einem Antrieb der Werkzeugmaschinentrennvorrichtung zu erzeugen. Bevorzugt wird zur Erzeugung von Kräften und/oder Drehmomenten mittels der Antriebseinheit thermische Energie, chemische Energie und/oder elektrische Energie in Bewegungsenergie umgewandelt. Besonders bevorzugt umfasst die Antriebseinheit zumindest einen Rotor, der zumindest eine Ankerwelle aufweist, und zumindest einen Stator. Vorzugsweise ist die Antriebseinheit als Elektromotoreinheit ausgebildet. Es ist jedoch auch denkbar, dass die Antriebseinheit eine andere, einem Fachmann als sinnvoll erscheinende Ausgestaltung aufweist. Vorzugsweise ist die Antriebseinheit der Werkzeugmaschine zusätzlich zur schwenkbaren Lagerung gemeinsam mit der Werkzeugmaschinentrennvorrichtung in einem montierten Zustand zumindest im Wesentlichen parallel zu einer Auflagefläche der Werkstückauflageeinheit verschiebbar gelagert. Der Begriff "Längsachse" soll hier insbesondere eine Achse definieren, entlang der die Werkzeugmaschinentrennvorrichtung eine maximale Abmessung aufweist. Die Längsachse verläuft bevorzugt zumindest im Wesentlichen parallel zu den zwei Geraden der Außenkontur der Führungseinheit. Mittels der schwenkbaren Lagerung der Antriebseinheit und der Werkzeugmaschinentrennvorrichtung kann vorteilhaft ein Gehrungsschnitt in einem zu bearbeitenden Werkstück erzeugt werden.

Vorteilhafterweise umfasst die Werkzeugmaschinentrennvorrichtung ein Drehmomentübertragungselement, das zumindest teilweise in der Führungseinheit gelagert ist. Bevorzugt ist das Drehmomentübertragungselement zumindest teilweise entlang zumindest einer Richtung von Außenwänden der Führungseinheit umgeben. Bevorzugt weist das Drehmomentübertragungselement eine konzentrische Kopplungsausnehmung auf, in die ein Ritzel der Motoreinheit und/oder ein Zahnrad und/oder eine verzahnte Welle der Getriebeeinheit in einem montierten Zustand eingreifen kann. Die Kopplungsausnehmung wird hierbei bevorzugt von einem Innensechskant gebildet. Es ist jedoch auch denkbar, dass die Kopplungsausnehmung eine andere, einem Fachmann als sinnvoll erscheinende Ausgestaltung aufweist. Mittels der Ausgestaltung der Werkzeugmaschinentrennvorrichtung kann konstruktiv einfach ein geschlossenes System erreicht werden, das komfortabel von einem Bediener an einer dazu vorgesehenen Werkzeugmaschine montierbar ist. Es kann somit vorteilhaft auf eine Einzelmontage von Komponenten, wie beispielsweise des Schneidstrangs, der Führungseinheit und des Drehmomentübertragungselements, durch den Bediener zum Gebrauch der Werkzeugmaschinentrennvorrichtung verzichtet werden.

Des Weiteren wird vorgeschlagen, dass der Schneidstrang zumindest ein Schneidenträgerelement aufweist, das auf einer dem Drehmomentübertragungselement zugewandten Seite des Schneidenträgerelements zumindest eine Ausnehmung aufweist, in die das Drehmomentübertragungselement in zumindest einem Betriebszustand zum Antrieb des Schneidstrangs eingreift. Das Drehmomentübertragungselement ist hierbei bevorzugt als Zahnrad ausgebildet, das entlang einer in einer sich senkrecht zur Rotationsachse erstreckenden Ebene verlaufenden Umfangsrichtung eine Vielzahl an Zähnen zum Antrieb des Schneidstrangs aufweist. Die Ausnehmung des Schneidenträgerelements ist bevorzugt korrespondierend mit einer Außenkontur der Zähne des als Zahnrad ausgebildeten Drehmomentübertragungselements ausgebildet. Es ist jedoch auch denkbar, dass das Drehmomentübertragungselement und/oder das Schneidenträgerelement eine andere, einem Fachmann als sinnvoll erscheinende Ausgestaltung aufweist. Besonders bevorzugt ist das Schneidenträgerelement zumindest auf der dem Drehmomentübertragungselement zugewandten Seite zumindest im Wesentlichen kreisbogenförmig ausgebildet. Die dem Drehmomentübertragungselement in einem montierten Zustand zugewandte Seite des Schneidenträgerelements ist insbesondere in zumindest einem Teilbereich, zwischen einer Mittelachse des in und/oder am Schneidenträgerelement angeordneten Verbindungselements und einer Mittelachse einer Verbindungsausnehmung des Schneidenträgerelements zur Aufnahme des Verbindungselements betrachtet, kreisbogenförmig ausgestaltet. Bevorzugt ist der kreisbogenförmige Teilbereich angrenzend an die Ausnehmung, in die das Drehmomentübertragungselement eingreift, ausgebildet. Besonders bevorzugt weist der kreisbogenförmige Teilbereich einen Radius auf, der zumindest im Wesentlichen einem Radius einer Umlenkkontur der Führungseinheit, insbesondere einer Umlenkkontur eines an einem konvexen Ende angeordneten Führungselements der Führungseinheit, entspricht. Vorzugsweise ist die dem Drehmomentübertragungselement in einem montierten Zustand zugewandte Seite des Schneidenträgerelements, insbesondere der Teilbereich, konkav ausgebildet. Mittels der Ausnehmungen des Schneidenträgerelements können konstruktiv einfach Kräfte und/oder Drehmomente zum Antrieb des Schneidstrangs von dem Drehmomentübertragungselement an das Schneidenträgerelement übertragen werden.

Zudem geht die Erfindung aus von einem Werkzeugmaschinensystem, mit zumindest einer Werkstückauflageeinheit zur Auflage eines Werkstücks während einer Bearbeitung und mit zumindest einer Kopplungsvorrichtung zur Kopplung mit einer Werkzeugmaschinentrennvorrichtung. Unter einer "Kopplungsvorrichtung" soll hier insbesondere eine Vorrichtung verstanden werden, die dazu vorgesehen ist, die Werkzeugmaschinentrennvorrichtung mittels einer formschlüssigen und/oder kraftschlüssigen Verbindung zur Bearbeitung eines Werkstücks mit der tragbaren Werkzeugmaschine wirkungsmäßig zu verbinden. Insbesondere können in einem mit der Werkzeugmaschinentrennvorrichtung gekoppelten Zustand der Kopplungsvorrichtung in einem Betriebszustand der tragbaren Werkzeugmaschine Kräfte und/oder Drehmomente von der Antriebseinheit der tragbaren Werkzeugmaschine zum Antrieb des Schneidstrangs an die Werkzeugmaschinentrennvorrichtung übertragen werden. Somit ist die Kopplungsvorrichtung vorzugsweise als Werkzeugaufnahme ausgebildet.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Werkzeugmaschinensystem mit einer Werkzeugmaschinentrennvorrichtung in einer schematischen Darstellung,
- Fig. 2: eine Detailansicht der Werkzeugmaschinentrennvorrichtung in einer schematischen Darstellung,
- Fig. 3: eine Schnittansicht entlang der Linie III-III aus Figur 2 der Werkzeugmaschinentrennvorrichtung in einer schematischen Darstellung,
- Fig. 4: eine Detailansicht von Schneidenträgerelementen eines Schneidstrangs der Werkzeugmaschinentrennvorrichtung in einer schematischen Darstellung,
- Fig. 5: eine weitere Detailansicht eines der Schneidenträgerelemente des Schneidstrangs der Werkzeugmaschinentrennvorrichtung in einer schematischen Darstellung,
- Fig. 6: eine Detailansicht einer Anordnung der Schneidenträgerelemente in einer Führungseinheit der Werkzeugmaschinentrennvorrichtung in einer schematischen Darstellung,
- Fig. 7: eine alternative Werkzeugmaschine mit einer Werkzeugmaschinentrennvorrichtung in einer schematischen Darstellung,
- Fig. 8: eine weitere alternative Werkzeugmaschine mit einer Werkzeugmaschinentrennvorrichtung in einer schematischen Darstellung,
- Fig. 9: eine weitere alternative Werkzeugmaschine mit einer Werkzeugmaschinentrennvorrichtung in einer schematischen Darstellung,
- Fig. 10: eine Detailansicht einer Lagerung einer Antriebseinheit und der Werkzeugmaschinentrennvorrichtung in der alternativen Werkzeugmaschine aus Figur 9 und
- Fig. 11: eine weitere alternative Werkzeugmaschine mit einer Werkzeugmaschinentrennvorrichtung in einer schematischen Darstellung.

### Beschreibung der Ausführungsbeispiele

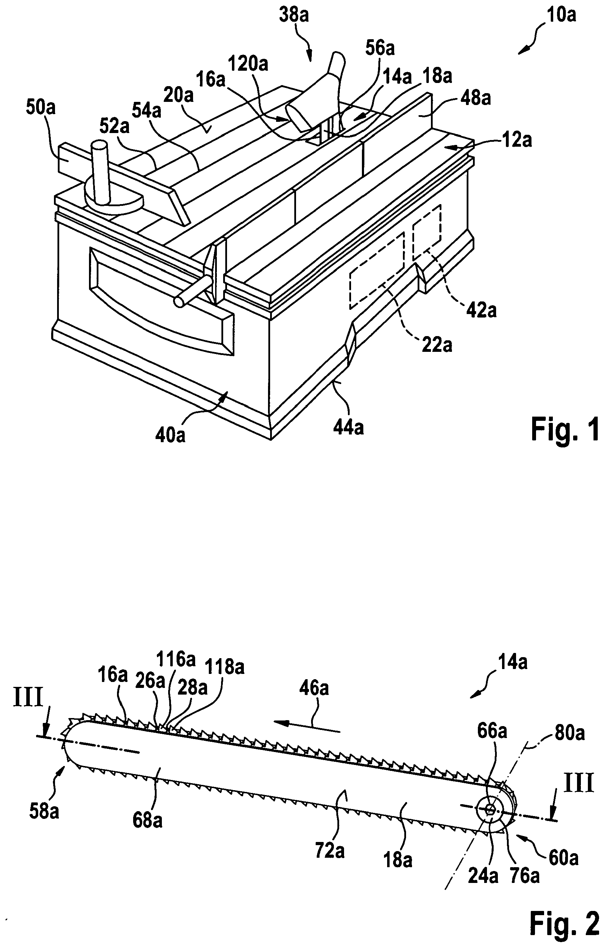

Figur 1 zeigt ein Werkzeugmaschinensystem, das eine von einer Tischsäge gebildete Werkzeugmaschine 10a und eine Werkzeugmaschinentrennvorrichtung 14a umfasst. Die Werkzeugmaschine 10a umfasst eine als Werkzeugaufnahme ausgebildete Kopplungsvorrichtung 38a zur formschlüssigen und/oder kraftschlüssigen Kopplung der Werkzeugmaschinentrennvorrichtung 14a mit der Werkzeugmaschine 10a. Die Werkzeugmaschinentrennvorrichtung 14a umfasst einen Schneidstrang 16a und eine Führungseinheit 18a zur Führung des Schneidstrangs 16a. Die Werkzeugmaschine 10a weist eine von einer Werkzeugtischplatte gebildete Werkstückauflageeinheit 12a auf, die auf einer Grundkörpereinheit 40a der Werkzeugmaschine 10a angeordnet ist. Die Grundkörpereinheit 40a ist dazu vorgesehen, eine Antriebseinheit 22a, eine Getriebeeinheit 42a und andere, einem Fachmann zum Betrieb einer Werkzeugmaschine 10a als sinnvoll erscheinende Bauteile und/oder Einheiten aufzunehmen und/oder zu lagern. Die Werkzeugmaschine 10a wird zu einer Bearbeitung von Werkstücken (hier nicht näher dargestellt) bei einer ordnungsgemäßen Handhabung der Werkzeugmaschine 10a mit einer Grundfläche 44a der Grundkörpereinheit 40a auf eine geeignete Fläche, wie beispielsweise eine Arbeitsplatte und/oder ein Fertigungshallenboden usw., abgestellt. Es ist jedoch auch denkbar, dass die Grundkörpereinheit 40a ausziehbare Füße aufweist, mittels denen die Werkzeugmaschine 10a zu einer Bearbeitung von Werkstücken auf eine geeignete Fläche abgestellt werden kann. Die Werkstückauflageeinheit 12a ist zur Auflage eines Werkstücks während einer Bearbeitung vorgesehen. Hierbei weist die Werkstückauflageeinheit 12a zwei als verstellbare Anschlagschienen ausgebildete Anschlagelemente 48a, 50a auf, an denen ein zu bearbeitendes Werkstück zur Führung anlegbar ist. Die Anschlagelemente 48a, 50a sind mittels Führungsnuten 52a, 54a der Werkstückauflageeinheit 12a verstellbar und/oder beweglich auf einer Auflagefläche 20a der Werkstückauflageeinheit 12a gelagert. Eines der zwei Anschlagelemente 48a, 50a ist dazu vorgesehen, eine Länge eines mittels der Werkzeugmaschinentrennvorrichtung 14a abzutrennendes Teilstücks und/oder eine Position eines in das Werkstück mittels der Werkzeugmaschinentrennvorrichtung 14a einzubringenden Schnitts relativ zu einer Außenfläche des Werkstücks auf eine, einem Fachmann bereits bekannte Art und Weise vorzugeben. Ferner ist eines der zwei Anschlagelemente 48a, 50a dazu vorgesehen, das Werkstück bei einer Bewegung auf der Auflagefläche 20a in Richtung der Werkzeugmaschinentrennvorrichtung 14a zu führen. Bei einer Bearbeitung eines Werkstücks wird das Werkstück mittels eines der Anschlagelemente 48a, 50a auf der Auflagefläche 20a in Richtung der Werkzeugmaschinentrennvorrichtung 14a bewegt.

Die Werkzeugmaschinentrennvorrichtung 14a erstreckt sich in einem Betriebszustand durch die Werkzeugauflageeinheit 12a hindurch. Hierbei weist die Werkzeugauflageeinheit 12a in der Auflagefläche 20a eine Ausnehmung 56a auf, durch die sich die Werkzeugmaschinentrennvorrichtung 14a in einem montierten Zustand zumindest im Wesentlichen senkrecht zur Auflagefläche 20a durch die Werkzeugauflageeinheit 12a hindurch erstreckt. Ferner ist es denkbar, dass die Werkzeugmaschine 10a eine Schutzvorrichtung (hier nicht näher dargestellt) umfasst, die mittels einer Sensoreinheit der Schutzvorrichtung eine Position einer Hand eines Bedieners relativ zur Werkzeugmaschinentrennvorrichtung 14a sensiert und die bei einer Gefahrensituation für den Bediener den Schneidstrang 16a der Werkzeugmaschinentrennvorrichtung 14a aktiv abbremst und/oder eine Energieversorgung der Antriebseinheit 22a unterbricht.

Die Antriebseinheit 22a und die Getriebeeinheit 42a sind zur Erzeugung eines auf die Werkzeugmaschinentrennvorrichtung 14a übertragbaren Antriebsmoments auf eine, einem Fachmann bereits bekannte Art und Weise wirkungsmäßig miteinander verbunden. Hierbei sind die Antriebseinheit 22a und/oder die Getriebeeinheit 42a dazu vorgesehen, in einem montierten Zustand der Werkzeugmaschinentrennvorrichtung 14a mittels der Kopplungsvorrichtung 38a mit dem Schneidstrang 16a der Werkzeugmaschinentrennvorrichtung 14a gekoppelt zu werden. Die Getriebeeinheit 42a der tragbaren Werkzeugmaschine 10a ist als Winkelgetriebe ausgebildet. Die Antriebseinheit 22a ist als Elektromotoreinheit ausgebildet. Es ist jedoch auch denkbar, dass die Antriebseinheit 22a und/oder die Getriebeeinheit 42a eine andere, einem Fachmann als sinnvoll erscheinende Ausgestaltung aufweisen. Ferner ist es ebenfalls denkbar, dass die Antriebseinheit 22a entkoppelt von der Getriebeeinheit 42a direkt mit der Werkzeugmaschinentrennvorrichtung 14a koppelbar ist. Die Antriebseinheit 22a ist dazu vorgesehen, den Schneidstrang 16a der Werkzeugmaschinentrennvorrichtung 14a in zumindest einem Betriebszustand mit einer Schnittgeschwindigkeit kleiner als 6 m/s anzutreiben. Hierbei weist die Werkzeugmaschine 10a zumindest einen Betriebsmodus auf, in dem ein Antrieb des Schneidstrangs 16a in der Führungseinheit 18a der Werkzeugmaschinentrennvorrichtung 14a entlang einer Schneidrichtung 46a des Schneidstrangs 12 mit einer Schnittgeschwindigkeit kleiner als 6 m/s ermöglicht wird.

Des Weiteren weist die Werkzeugmaschine 10a eine Schutzhaubeneinheit 120a auf, die die Werkzeugmaschinentrennvorrichtung 14a zumindest in einem Betriebszustand teilweise umschließt. Die Schutzhaubeneinheit 120a umfasst zwei Seitenwände, zwischen denen die Werkzeugmaschinentrennvorrichtung 14a in zumindest einem Betriebszustand angeordnet ist. Die Seitenwände der Schutzhaubeneinheit 120a verlaufen in einem montierten Zustand zumindest im Wesentlichen parallel zur Schneidebene des Schneidstrangs 16a. Die Schutzhaubeneinheit 120a kann zur Bearbeitung eines Werkstücks relativ zur Werkzeugmaschinentrennvorrichtung 14a geschwenkt werden. Es ist jedoch auch denkbar, dass die Schutzhaubeneinheit 120a eine andere, einem Fachmann als sinnvoll erscheinende Ausgestaltung aufweist.

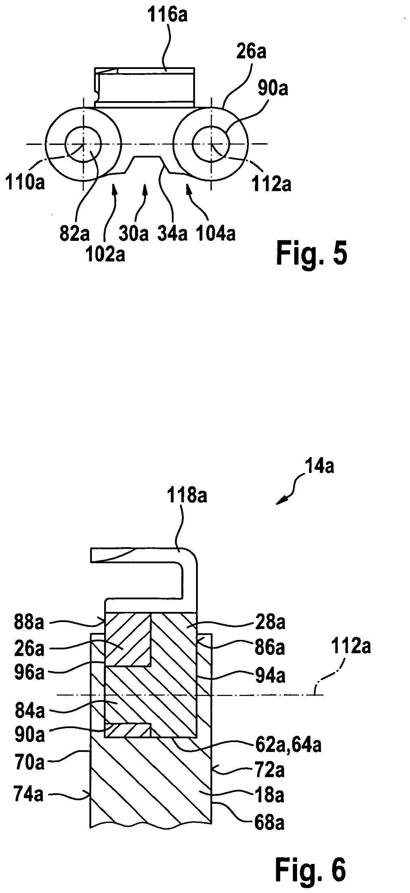

Figur 2 zeigt die Werkzeugmaschinentrennvorrichtung 14a in einem von der Kopplungsvorrichtung 38a der Werkzeugmaschine 10a entkoppelten Zustand. Der Schneidstrang 16a und die Führungseinheit 18a bilden zusammen ein geschlossenes System. Die Führungseinheit 18a ist als Schwert ausgebildet. Ferner weist die Führungseinheit 18a, in der Schneidebene des Schneidstrangs 16a betrachtet, zumindest zwei konvex ausgebildete Enden 58a, 60a auf. Die konvex ausgebildeten Enden 58a, 60a der Führungseinheit 18a sind an zwei sich abgewandten Seiten der Führungseinheit 18a angeordnet. Der Schneidstrang 16a wird mittels der Führungseinheit 18a geführt. Hierzu weist die Führungseinheit 18a zumindest ein Führungselement 62a (Figur 6) auf, mittels dessen der Schneidstrang 16a geführt wird. Das Führungselement 62a ist hierbei als Führungsnut 64a ausgebildet, die sich in einer Schneidebene des Schneidstrangs 16a entlang eines gesamten Umfangs der Führungseinheit 18a erstreckt. Hierbei wird der Schneidstrang 16a mittels die Führungsnut 64a begrenzende Randbereiche der Führungseinheit 18a geführt. Es ist jedoch auch denkbar, dass das Führungselement 62a in einer anderen, einem Fachmann als sinnvoll erscheinenden Art und Weise, wie beispielsweise als rippenartige Anformung an der Führungseinheit 18a, die in eine Ausnehmung an dem Schneidstrang 16a eingreift, ausgebildet ist. Der Schneidstrang 16a wird, in einer senkrecht zur Schneidebene verlaufenden Ebene betrachtet, von drei Seiten von den die Führungsnut 64a begrenzenden Randbereiche umgeben (Figur 6). Der Schneidstrang 16a wird während eines Betriebs umlaufend entlang des Umfangs in der Führungsnut 64a relativ zur Führungseinheit 18a bewegt.

Des Weiteren weist die Werkzeugmaschinentrennvorrichtung 14a ein mittels der Führungseinheit 18a zumindest teilweise gelagertes Drehmomentübertragungselement 24a zum Antrieb des Schneidstrangs 16a auf. Hierbei weist das Drehmomentübertragungselement 24a eine Kopplungsausnehmung 66a auf, die in einem montierten Zustand mit einer Abtriebswelle (hier nicht näher dargestellt) der Getriebeeinheit 42a und/oder einem auf der Abtriebswelle angeordneten Zahnrad (hier nicht näher dargestellt) der Getriebeeinheit 42a koppelbar ist. Es ist jedoch auch denkbar, dass das Drehmomentübertragungselement 24a in einem gekoppelten Zustand zum Antrieb des Schneidstrangs 16a direkt mit einem auf einer Antriebswelle (hier nicht näher dargestellt) der Antriebseinheit 22a angeordneten Ritzel (hier nicht näher dargestellt) der Antriebseinheit 22a gekoppelt ist. Die Kopplungsausnehmung 66a ist konzentrisch im Drehmomentübertragungselement 24a angeordnet. Die Kopplungsausnehmung 66a ist als Innensechskant ausgebildet. Es ist jedoch auch denkbar, dass die Kopplungsausnehmung 66a eine andere, einem Fachmann als sinnvoll erscheinende Ausgestaltung aufweist.

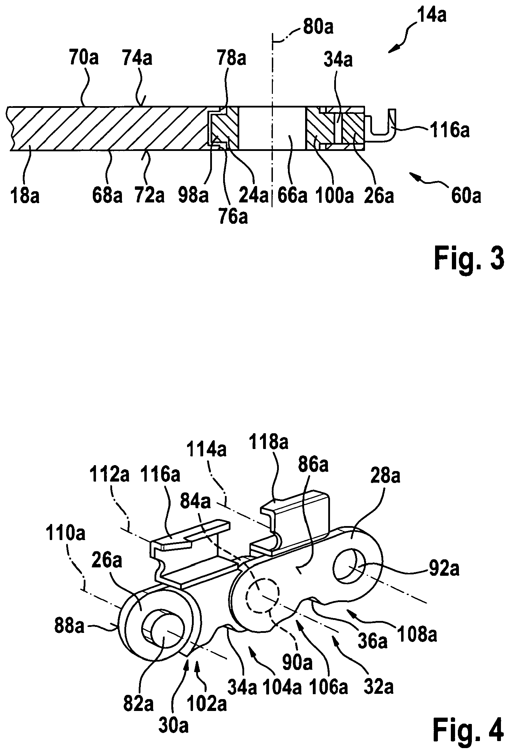

In einem ungekoppelten Zustand ist das Drehmomentübertragungselement 24a quer zur Schneidrichtung 46a des Schneidstrangs 16a und/oder entlang der Schneidrichtung 46a in der Führungseinheit 18a beweglich angeordnet (Figur 3).

Hierbei ist das Drehmomentübertragungselement 24a zumindest teilweise zwischen zwei Außenwänden 68a, 70a der Führungseinheit 18a angeordnet. Die Außenwände 68a, 70a verlaufen zumindest im Wesentlichen parallel zur Schneidebene des Schneidstrangs 16a. Die Führungseinheit 18a weist in Außenflächen 72a, 74a der Außenwände 68a, 70a jeweils eine Ausnehmung 76a, 78a auf, in der das Drehmomentübertragungselement 24a zumindest teilweise angeordnet ist.

Das Drehmomentübertragungselement 24a ist mit einem Teilbereich in den Ausnehmungen 76a, 78a der Außenwände 70a, 72a angeordnet. Das Drehmomentübertragungselement 24a weist hierbei zumindest in dem in den Ausnehmungen 76a, 78a angeordneten Teilbereich eine Erstreckung entlang einer Rotationsachse 80a des Drehmomentübertragungselements 24a auf, die bündig mit einer der Außenflächen 72a, 74a der Führungseinheit 18a abschließt. Ferner weist der in den Ausnehmungen 76a, 78a der Außenflächen 72a, 74a der Führungseinheit 18a angeordnete Teilbereich des Drehmomentübertragungselements 24a eine sich zumindest im Wesentlichen senkrecht zur Rotationsachse 80a des Drehmomentübertragungselements 24a erstreckende Außenabmessung auf, die zumindest 0,1 mm kleiner ist als eine sich zumindest im Wesentlichen senkrecht zur Rotationsachse 80a des Drehmomentübertragungselements 24a erstreckende Innenabmessung der Ausnehmungen 76a, 78a. Der in den Ausnehmungen 76a, 78a angeordnete Teilbereich des Drehmomentübertragungselements 24a ist entlang einer senkrecht zur Rotationsachse 80a verlaufenden Richtung jeweils beabstandet zu einem die jeweilige Ausnehmung 76a, 78a begrenzenden Rand der Außenwände 70a, 72a. Somit weist der in den Ausnehmungen 76a, 78a angeordnete Teilbereich des Drehmomentübertragungselements 24a ein Spiel innerhalb der Ausnehmungen 76a, 78a auf.

Figur 4 zeigt eine Detailansicht von Schneidenträgerelementen 26a, 28a des Schneidstrangs 16a der Werkzeugmaschinentrennvorrichtung 14a. Der Schneidstrang 16a umfasst eine Vielzahl miteinander verbundener Schneidenträgerelemente 26a, 28a, die jeweils mittels eines Verbindungselements 82a, 84a des Schneidstrangs 16a miteinander verbunden sind, das zumindest im Wesentlichen bündig mit einer von zwei Außenflächen 86a, 88a eines der miteinander verbundenen Schneidenträgerelemente 26a, 28a abschließt (vgl. auch Figur 6). Die Verbindungselemente 82a, 84a sind bolzenförmig ausgebildet. Die Außenflächen 86a, 88a verlaufen in einem in der Führungsnut 64a angeordneten Zustand des Schneidstrangs 16a zumindest im Wesentlichen parallel zur Schneidebene des Schneidstrangs 16a. Ein Fachmann wird je nach Anwendungsfall eine für den Schneidstrang 16a geeignete Anzahl an Schneidenträgerelementen 26a, 28a auswählen. Die Schneidenträgerelemente 26a, 28a sind jeweils einstückig mit einem der Verbindungselemente 26a, 28a ausgebildet. Ferner weisen die Schneidenträgerelemente 26a, 28a jeweils eine Verbindungsausnehmung 90a, 92a zur Aufnahme eines der Verbindungselemente 82a, 84a der miteinander verbundenen Schneidenträgerelemente 26a, 28a auf. Die Verbindungselemente 82a, 84a sind mittels der Führungseinheit 18a geführt (Figur 6). Hierbei sind die Verbindungselemente 82a, 84a in einem montierten Zustand des Schneidstrangs 16a in der Führungsnut 64a angeordnet. Die Verbindungselemente 82a, 84a können sich, in einer senkrecht zur Schneidebene verlaufenden Ebene betrachtet, an zwei Seitenwänden 94a, 96a der Führungsnut 64a abstützen. Die Seitenwände 94a, 96a begrenzen die Führungsnut 64a entlang einer senkrecht zur Schneidebene verlaufenden Richtung. Ferner erstrecken sich die Seitenwände 94a, 96a der Führungsnut 64a, in der Schneidebene betrachtet, ausgehend von der Führungseinheit 18a senkrecht zur Schneidrichtung 46a des Schneidstrangs 16a nach außen.

Die Schneidenträgerelemente 26a, 28a des Schneidstrangs 16a weisen jeweils eine Ausnehmung 34a, 36a auf, die jeweils in einem montierten Zustand auf einer dem Drehmomentübertragungselement 24a zugewandten Seite 30a, 32a des jeweiligen Schneidenträgerelements 26a, 28a angeordnet ist. Das Drehmomentübertragungselement 24a greift in zumindest einem Betriebszustand zum Antrieb des Schneidstrangs 16a in die Ausnehmungen 34a, 36a ein. Das Drehmomentübertragungselement 24a ist hierbei als Zahnrad ausgebildet. Somit umfasst das Drehmomentübertragungselement 24a Zähne 98a, 100a, die dazu vorgesehen sind, in zumindest einem Betriebszustand zum Antrieb des Schneidstrangs 16a in die Ausnehmungen 34a, 36a der Schneidenträgerelemente 26a, 28a einzugreifen. Ferner sind die dem Drehmomentübertragungselement 24a zugewandten Seiten 30a, 32a der Schneidenträgerelemente 26a, 28a kreisbogenförmig ausgebildet. Die dem Drehmomentübertragungselement 24a in einem montierten Zustand zugewandten Seiten 30a, 32a der Schneidenträgerelemente 26a, 28a sind jeweils in Teilbereichen 102a, 104a, 106a, 108a, zwischen einer Mittelachse 110a des jeweiligen Verbindungselements 82a, 84a und einer Mittelachse 112a, 114a der jeweiligen Verbindungsausnehmung 90a, 92a betrachtet, kreisbogenförmig ausgestaltet. Die kreisbogenförmigen Teilbereiche 102a, 104a, 106a, 108a sind jeweils angrenzend an die Ausnehmungen 34a, 36a, in die das Drehmomentübertragungselement 24a eingreift, ausgebildet. Hierbei weisen die kreisbogenförmigen Teilbereiche 102a, 104a, 106a, 108a einen Radius auf, der einem Radius eines Verlaufs der Führungsnut 64a an den konvexen Enden 58a, 60a entspricht. Die Teilbereiche 102a, 104a, 106a, 108a sind konkav ausgebildet (Figur 5).

Ferner weist der Schneidstrang 16a Schneidelemente 116a, 118a auf. Die Schneidelemente 116a, 118a sind jeweils einstückig mit einem der Schneidenträgerelemente 26a, 28a ausgebildet. Es ist jedoch auch denkbar, dass die Schneidelemente 116a, 118a getrennt von den Schneidenträgerelementen 26a, 28a ausgebildet sind. Eine Anzahl der Schneidelemente 116a, 118a ist abhängig von einer Anzahl an Schneidenträgerelementen 26a, 28a. Ein Fachmann wird je nach Anzahl an Schneidenträgerelementen 26a, 28a eine geeignete Anzahl an Schneidelementen 116a, 118a auswählen. Die Schneidelemente 116a, 118a sind dazu vorgesehen, ein Abtrennen und/oder ein Abtragen von Werkstoffteilchen eines zu bearbeitenden Werkstücks zu ermöglichen. Die Schneidelemente 116a, 118a können beispielsweise als Vollmeißel, Halbmeißel oder andere, einem Fachmann als sinnvoll erscheinende Schneidenarten ausgebildet sein, die dazu vorgesehen sind, ein Abtrennen und/oder ein Abtragen von Werkstoffteilchen eines zu bearbeitenden Werkstücks zu ermöglichen. Der Schneidstrang 16a ist endlos ausgebildet. Somit ist der Schneidstrang 16a als Schneidkette ausgebildet. Die Schneidenträgerelemente 26a, 28a sind hierbei als Kettenglieder ausgebildet, die mittels der bolzenförmigen Verbindungselemente 82a, 84a miteinander verbunden sind. Es ist jedoch auch denkbar, dass der Schneidstrang 16a, die Schneidenträgerelemente 26a 28a und/oder die Verbindungselemente 82a, 84a in einer anderen, einem Fachmann als sinnvoll erscheinenden Art und Weise ausgestaltet sind.

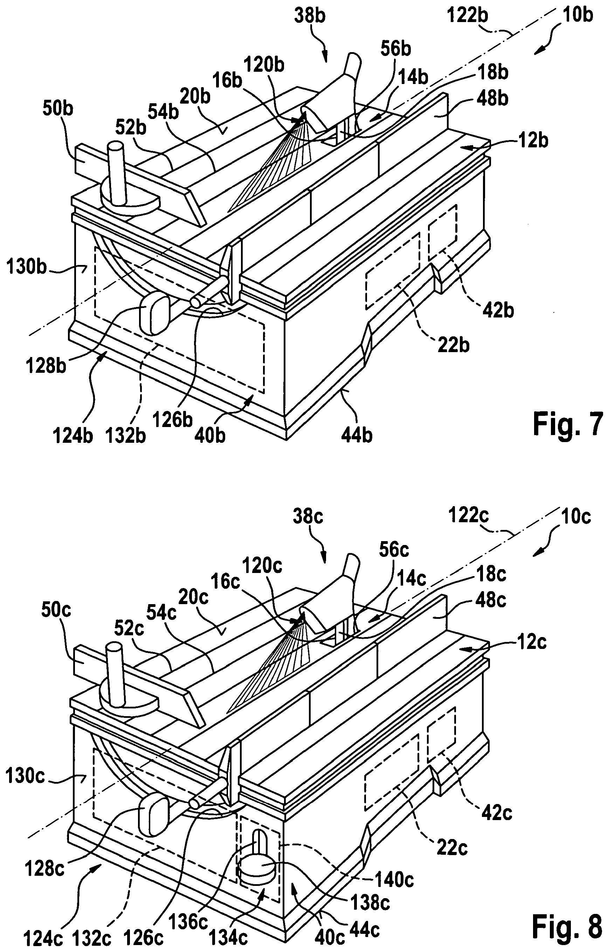

In Figuren 7 bis 11 sind alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis e hinzugefügt. Die nachfolgende Beschreibung beschränkt sich im Wesentlichen auf die Unterschiede zu dem ersten Ausführungsbeispiel in den Figuren 1 bis 6, wobei bezüglich gleichbleibender Bauteile, Merkmale und Funktionen auf die Beschreibung des ersten Ausführungsbeispiels in den Figuren 1 bis 6 verwiesen werden kann.

Figur 7 zeigt eine alternatives Werkzeugmaschinensystem, das eine als Tischsäge ausgebildete Werkzeugmaschine 10b und eine Werkzeugmaschinentrennvorrichtung 14b umfasst. Die Werkzeugmaschinentrennvorrichtung 14b weist einen Schneidstrang 16b und eine Führungseinheit 18b zur Führung des Schneidstrangs 16b auf. Ferner weist die Werkzeugmaschinentrennvorrichtung 14b einen zu der in den Figuren 1 bis 6 beschriebenen Werkzeugmaschinentrennvorrichtung 14a analogen Aufbau auf. Die Werkzeugmaschine 10b umfasst eine Werkstückauflageeinheit 12b zur Auflage eines Werkstücks während einer Bearbeitung mittels der Werkzeugmaschinentrennvorrichtung 14b und eine Grundkörpereinheit 40b, auf der die Werkstückauflageeinheit 12b angeordnet ist. Die Werkstückauflageeinheit 12b weist in einer Auflagefläche 20b der Werkstückauflageeinheit 12b eine Ausnehmung 56b auf, durch die sich die Werkzeugmaschinentrennvorrichtung 14b in zumindest einem Betriebszustand durch die Werkstückauflageeinheit 12b hindurch erstreckt. Die Werkzeugmaschinentrennvorrichtung 14b ist in einem montierten Zustand relativ zur Werkstückauflageeinheit 12b beweglich gelagert. Die Führungseinheit 18b ist zusammen mit dem an der Führungseinheit 18b montierten Schneidstrang 16b in einem montierten Zustand relativ zur Werkstückauflageeinheit 12b beweglich gelagert. Hierbei ist die Werkzeugmaschinentrennvorrichtung 14b in einem montierten Zustand zumindest relativ zur Werkstückauflageeinheit 12b schwenkbar gelagert. Die Führungseinheit 18b ist zusammen mit dem an der Führungseinheit 18b montierten Schneidstrang 16b in einem montierten Zustand relativ zur Werkstückauflageeinheit 12b schwenkbar gelagert.

Eine Schwenkachse 122b der Werkzeugmaschinentrennvorrichtung 14b verläuft zumindest im Wesentlichen parallel zur Auflagefläche 20b der Werkstückauflageeinheit 12b. Bei einer Schwenkbewegung der Werkzeugmaschinentrennvorrichtung 14b relativ zur Werkstückauflageeinheit 12b wird eine Schneidebene des Schneidstrangs 16b relativ zur Auflagefläche 20b der Werkstückauflageeinheit 14b verkippt. Die Werkzeugmaschinentrennvorrichtung 14b kann ausgehend von einer Mittelstellung der Werkzeugmaschinentrennvorrichtung 14b in zwei entgegengesetzt gerichtete Richtungen relativ zur Werkstückauflageeinheit 14b geschwenkt werden. In der Mittelstellung der Werkzeugmaschinentrennvorrichtung 14b erstreckt sich die Schneidebene des Schneidstrangs 16b zumindest im Wesentlichen senkrecht zur Auflagefläche 20b. Die Werkzeugmaschinentrennvorrichtung 14b kann ausgehend von der Mittelstellung jeweils entlang der zwei entgegengesetzt gerichteten Richtungen um einem Winkel von 45° um die Schwenkachse 122b geschwenkt werden.

Die Werkzeugmaschine 10b umfasst eine Schwenkeinheit 124b durch die ein Bediener die Werkzeugmaschinentrennvorrichtung 14b relativ zur Werkstückauflageeinheit 12b schwenken kann. Die Schwenkeinheit 124b umfasst eine kreisbogenförmige Ausnehmung 126b, in der ein Bedienelement 128b beweglich angeordnet ist. Die Ausnehmung 126b ist hierbei in einer Seitenfläche 130b der Grundkörpereinheit 40b angeordnet. Das Bedienelement 128b ist mittels eines Gestänges (hier nicht näher dargestellt) mit der Werkzeugmaschinentrennvorrichtung 14b und/oder einer Antriebseinheit 22b und einer Getriebeeinheit 42b der Werkzeugmaschine 10b wirkungsmäßig verbunden. Die Grundkörpereinheit 40b umfasst ferner eine kreisbogenförmige Kulisse (hier nicht näher dargestellt) zur Lagerung des Gestänges in der Grundkörpereinheit 40b. Die Kulisse ist an einer Seite der Grundkörpereinheit 40b angeordnet, die der Seitenfläche 130b, in der die kreisbogenförmige Ausnehmung 126b angeordnet ist, entlang einer senkrecht zur Seitenfläche 130b verlaufenden Richtung gegenüberliegt. Die Antriebseinheit 22b und die Getriebeeinheit 42b werden bei einer Schwenkbewegung zusammen mit der Werkzeugmaschinentrennvorrichtung 14b um die Schwenkachse 122b geschwenkt. Es ist jedoch auch denkbar, dass das Bedienelement 128b mittels eines anderen, einem Fachmann als sinnvoll erscheinenden Elements und/oder Mechanismus mit der Werkzeugmaschinentrennvorrichtung 14b und/oder der Antriebseinheit 22b und der Getriebeeinheit 42b der Werkzeugmaschine 10b wirkungsmäßig verbunden ist.

Ferner umfasst die Schwenkeinheit 124b eine Rastvorrichtung 132b, die dazu vorgesehen ist, das Gestänge und somit die Werkzeugmaschinentrennvorrichtung 14b zusammen mit der Antriebseinheit 22b und der Getriebeeinheit 42b in einer Schwenkposition relativ zur Auflagefläche 20b zu fixieren. Die Schwenkposition kann hierbei stufenlos einstellbar sein, wie beispielsweise mittels einer Klemmvorrichtung, die das Gestänge in einer Schwenkposition hält. Es ist jedoch auch denkbar, dass die Schwenkposition in Stufen einstellbar ist, wie beispielweise mittels Rastausnehmungen oder Rastvorsprüngen der Rastvorrichtung 132b, in die das Gestänge einrasten kann oder die in Ausnehmungen in dem Gestänge einrasten können.

Figur 8 zeigt ein weiteres alternatives Werkzeugmaschinensystem, das eine als Tischsäge ausgebildete Werkzeugmaschine 10c und eine Werkzeugmaschinentrennvorrichtung 14c umfasst. Die Werkzeugmaschinentrennvorrichtung 14c weist einen Schneidstrang 16c und eine Führungseinheit 18c zur Führung des Schneidstrangs 16c auf. Ferner weist die Werkzeugmaschinentrennvorrichtung 14c einen zu der in den Figuren 1 bis 6 beschriebenen Werkzeugmaschinentrennvorrichtung 14a analogen Aufbau auf. Die Werkzeugmaschine 10c weist einen zumindest im Wesentlichen analogen Aufbau zu der in der Figur 7 beschriebenen Werkzeugmaschine 10b auf. Die Werkzeugmaschine 10c umfasst eine Werkstückauflageeinheit 12c zur Auflage eines Werkstücks während einer Bearbeitung und eine Grundkörpereinheit 40c, auf der die Werkstückauflageeinheit 12c angeordnet ist. Die Werkstückauflageeinheit 12c weist in einer Auflagefläche 20c der Werkstückauflageeinheit 12c eine Ausnehmung 56c auf, durch die sich die Werkzeugmaschinentrennvorrichtung 14c in zumindest einem Betriebszustand durch die Werkstückauflageeinheit 12c hindurch erstreckt. Die Werkzeugmaschinentrennvorrichtung 14c ist in einem montierten Zustand relativ zur Werkstückauflageeinheit 12c beweglich gelagert. Hierbei ist die Führungseinheit 18c zusammen mit dem an der Führungseinheit 18c montierten Schneidstrang 16c in einem montierten Zustand relativ zur Werkstückauflageeinheit 12c beweglich gelagert. Ferner ist die Werkzeugmaschinentrennvorrichtung 14c in einem montierten Zustand zumindest relativ zur Werkstückauflageeinheit 12c schwenkbar gelagert. Die Führungseinheit 18c ist zusammen mit dem an der Führungseinheit 18c montierten Schneidstrang 16c in einem montierten Zustand relativ zur Werkstückauflageeinheit 12c schwenkbar gelagert. Hierbei umfasst die Werkzeugmaschine 10c eine Schwenkeinheit 124c, die ein kreisbogenförmige Ausnehmung 126c und ein Bedienelement 128c umfasst.

Zusätzlich ist die Werkzeugmaschinentrennvorrichtung 14c entlang einer zumindest im Wesentlichen senkrecht zur Auflagefläche 20c beweglich gelagert. Hierbei weist die Werkzeugmaschine 10c eine Lineareinstelleinheit 134c auf, die dazu vorgesehen ist, die Werkzeugmaschinentrennvorrichtung 14c linear entlang der senkrecht zur Auflagefläche 20c verlaufenden Richtung zu bewegen. Die Lineareinstelleinheit 134c umfasst eine als Langloch ausgebildete Ausnehmung 136c, in der ein weiteres Bedienelement 138b beweglich angeordnet ist. Die Ausnehmung 136c ist hierbei in einer Seitenfläche 130c der Grundkörpereinheit 40c angeordnet. Das Bedienelement 138c ist mittels eines Gestänges (hier nicht näher dargestellt) mit der Werkzeugmaschinentrennvorrichtung 14c und/oder einer Antriebseinheit 22c und einer Getriebeeinheit 42c der Werkzeugmaschine 10c wirkungsmäßig verbunden. Die Grundkörpereinheit 40c umfasst ferner eine Kulisse (hier nicht näher dargestellt) zur Lagerung des Gestänges in der Grundkörpereinheit 40c. Die Kulisse ist an einer Seite der Grundkörpereinheit 40c angeordnet, die der Seitenfläche 130c, in der die als Langloch ausgebildete Ausnehmung 136c angeordnet ist, entlang einer senkrecht zur Seitenfläche 130c verlaufenden Richtung gegenüberliegt. Die Antriebseinheit 22c und die Getriebeeinheit 42c werden bei einer Linearbewegung zusammen mit der Werkzeugmaschinentrennvorrichtung 14c linear entlang der senkrecht zur Auflagefläche 20c verlaufenden Richtung bewegt. Es ist jedoch auch denkbar, dass das weitere Bedienelement 138c mittels eines anderen, einem Fachmann als sinnvoll erscheinenden Elements und/oder Mechanismus mit der Werkzeugmaschinentrennvorrichtung 14c und/oder der Antriebseinheit 22c und der Getriebeeinheit 42c der Werkzeugmaschine 10c wirkungsmäßig verbunden ist.

Ferner umfasst die Lineareinstelleinheit 134c eine weitere Rastvorrichtung 140c, die dazu vorgesehen ist, das Gestänge und somit die Werkzeugmaschinentrennvorrichtung 14c zusammen mit der Antriebseinheit 22c und der Getriebeeinheit 42c in einer Linearposition relativ zur Auflagefläche 20c zu fixieren. Die Linearposition kann hierbei stufenlos einstellbar sein, wie beispielsweise mittels eine Klemmvorrichtung, die das Gestänge in einer Linearposition hält. Es ist jedoch auch denkbar, dass die Linearposition in Stufen einstellbar ist, wie beispielweise mittels Rastausnehmungen oder Rastvorsprüngen der weiteren Rastvorrichtung 140c, in die das Gestänge einrasten kann oder die in Ausnehmungen in dem Gestänge einrasten können.

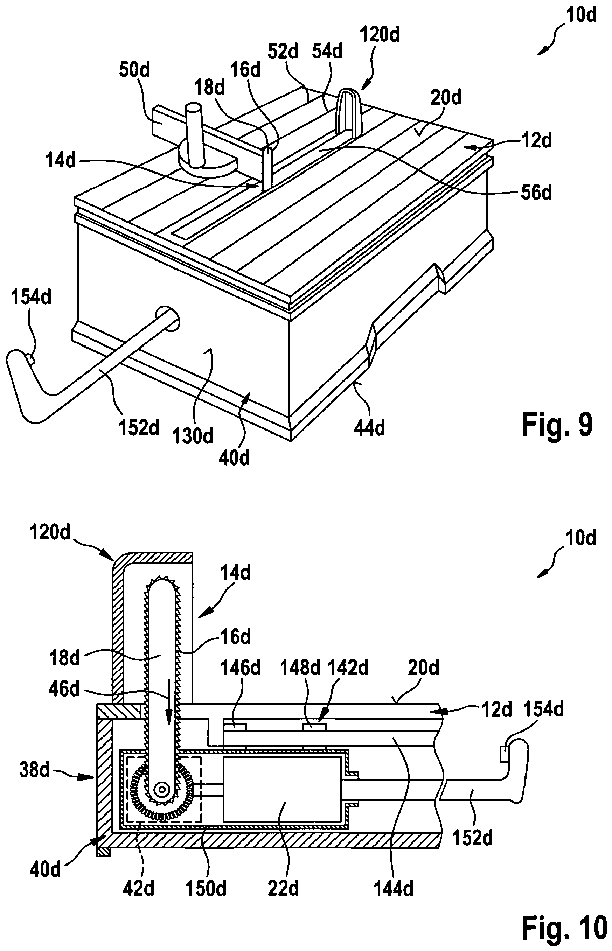

Figur 9 zeigt ein weiteres alternatives Werkzeugmaschinensystem, das eine als Unterflursäge ausgebildete Werkzeugmaschine 10d und eine Werkzeugmaschinentrennvorrichtung 14d umfasst. Die Werkzeugmaschinentrennvorrichtung 14d weist einen Schneidstrang 16d und eine Führungseinheit 18d zur Führung des Schneidstrangs 16d auf. Ferner weist die Werkzeugmaschinentrennvorrichtung 14d einen zu der in den Figuren 1 bis 6 beschriebenen Werkzeugmaschinentrennvorrichtung 14a analogen Aufbau auf. Die Werkzeugmaschine 10d umfasst eine Werkstückauflageeinheit 12d zur Auflage eines Werkstücks während einer Bearbeitung und eine Grundkörpereinheit 40d, auf der die Werkstückauflageeinheit 12d angeordnet ist. Die Werkstückauflageeinheit 12d weist in einer Auflagefläche 20d der Werkstückauflageeinheit 12d eine Ausnehmung 56d auf, durch die sich die Werkzeugmaschinentrennvorrichtung 14d in zumindest einem Betriebszustand durch die Werkstückauflageeinheit 12d hindurch erstreckt. Die Werkzeugmaschinentrennvorrichtung 14d ist in einem montierten Zustand relativ zur Werkstückauflageeinheit 12d beweglich gelagert. Hierbei ist die Führungseinheit 18d zusammen mit dem an der Führungseinheit 18d montierten Schneidstrang 16d in einem montierten Zustand relativ zur Werkstückauflageeinheit 12d beweglich gelagert. Die Werkzeugmaschinentrennvorrichtung 14d ist zusammen mit einer Antriebseinheit 22d und einer Getriebeeinheit 42d der Werkzeugmaschine 10d entlang einer zumindest im Wesentlichen parallel zur Auflagefläche 20d verlaufenden Richtung relativ zur Werkstückauflageeinheit 12d linear beweglich gelagert. Die Werkzeugmaschine 10d weist hierbei eine Linearlagereinheit 142d auf, die dazu vorgesehen ist, die Werkzeugmaschinentrennvorrichtung 14d, die Antriebseinheit 22d und die Getriebeeinheit 42d linear beweglich zu lagern.

Figur 10 zeigt die Linearlagereinheit 142d, die ein Führungselement 144d umfasst, das in der Grundkörpereinheit 40d angeordnet ist. Das Führungselement 144d ist als Führungsschiene und/oder als Führungsstange ausgebildet. Ferner ist das Führungselement 144d mittels Befestigungselementen (hier nicht näher dargestellt) der Grundkörpereinheit 40d in der Grundkörpereinheit 40d fixiert. Des Weiteren umfasst die Linearlagereinheit 142d Lagerelemente 146d, 148d, die ein Gehäuse 150d der Linearlagereinheit 142d linear beweglich mit dem Führungselement 144d verbinden. Das Gehäuse 150d ist dazu vorgesehen, die Werkzeugmaschinentrennvorrichtung 14d, die Antriebseinheit 22d und die Getriebeeinheit 42d aufzunehmen. An dem Gehäuse 150d ist ein stabförmiges Betätigungselement 152d befestigt, das sich mit einem Ende ausgehend von dem Gehäuse 150d der in der Grundkörpereinheit 40d angeordneten Linearlagereinheit 142d aus der Grundkörpereinheit 40d hinaus erstreckt. An dem aus der Grundkörpereinheit 40d hinaus erstreckenden Ende des Betätigungselements 152d ist ein Schaltelement 154d angeordnet, das dazu vorgesehen ist, einen Stromkreis zur Bestromung der Antriebseinheit 22d zu öffnen und/oder zu schließen.

Ein Bediener kann mittels einer linearen Bewegung entlang der zumindest im Wesentlichen parallel zur Auflagefläche 20d verlaufenden Richtung des Betätigungselements 152d die Werkzeugmaschinentrennvorrichtung 14d zusammen mit der Antriebseinheit 22d und der Getriebeeinheit 40d entlang des Führungselements 144d linear bewegen. Die Ausnehmung 56d der Auflagefläche 20d ist hierbei zur Ermöglichung einer sich durch die Werkstückauflageeinheit 12d hindurch erstreckende Werkzeugmaschinentrennvorrichtung 14d schlitzförmig ausgebildet. Die schlitzförmige Ausnehmung 56d erstreckt sich entlang einer parallel zur Auflagefläche 20d verlaufenden Bewegungsrichtung der Werkzeugmaschinentrennvorrichtung 14d im Vergleich zu einer Gesamterstreckung der Auflagefläche 20d entlang der parallel zur Auflagefläche 20d verlaufenden Bewegungsrichtung zumindest im Wesentlichen entlang 80 % der Gesamterstreckung der Auflagefläche 20d.

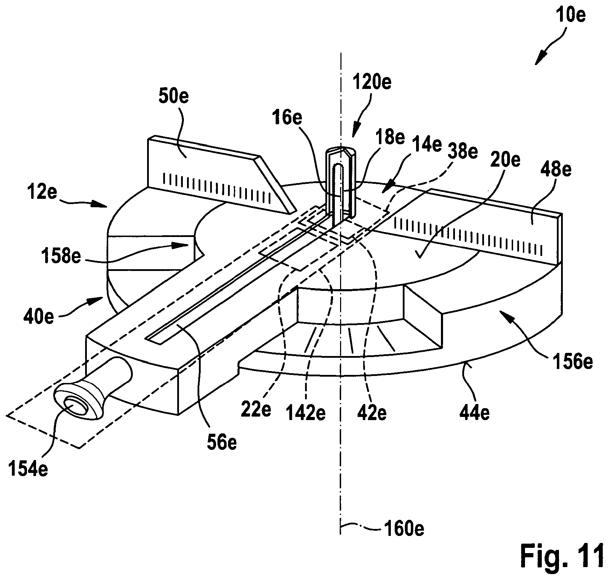

Figur 11 zeigt ein weiteres alternatives Werkzeugmaschinensystem, das eine als Unterflurkappsäge ausgebildete Werkzeugmaschine 10e und eine Werkzeugmaschinentrennvorrichtung 14e umfasst. Die Werkzeugmaschinentrennvorrichtung 14e weist einen Schneidstrang 16e und eine Führungseinheit 18e zur Führung des Schneidstrangs 16e auf. Ferner weist die Werkzeugmaschinentrennvorrichtung 14e einen zu der in den Figuren 1 bis 6 beschriebenen Werkzeugmaschinentrennvorrichtung 14a analogen Aufbau auf. Die Werkzeugmaschine 10e umfasst eine Werkstückauflageeinheit 12e zur Auflage eines Werkstücks während einer Bearbeitung und eine Grundkörpereinheit 40e, auf der die Werkstückauflageeinheit 12e angeordnet ist. Die Werkstückauflageeinheit 12e weist in einer Auflagefläche 20e der Werkstückauflageeinheit 12e eine Ausnehmung 56e auf, durch die sich die Werkzeugmaschinentrennvorrichtung 14e in zumindest einem Betriebszustand durch die Werkstückauflageeinheit 12e hindurch erstreckt. Die Werkzeugmaschinentrennvorrichtung 14e ist in einem montierten Zustand relativ zur Werkstückauflageeinheit 12e beweglich gelagert. Hierbei ist die Führungseinheit 18e zusammen mit dem an der Führungseinheit 18e montierten Schneidstrang 16e in einem montierten Zustand relativ zur Werkstückauflageeinheit 12e beweglich gelagert. Die Werkzeugmaschinentrennvorrichtung 14e ist zusammen mit einer Antriebseinheit 22e und einer Getriebeeinheit 42e der Werkzeugmaschine 10e entlang einer zumindest im Wesentlichen parallel zur Auflagefläche 20e verlaufenden Richtung relativ zur Werkstückauflageeinheit 12e linear beweglich gelagert. Die Werkzeugmaschine 10e weist hierbei eine Linearlagereinheit auf (hier nicht näher dargestellt), die dazu vorgesehen ist, die Werkzeugmaschinentrennvorrichtung 14e, die Antriebseinheit 22e und die Getriebeeinheit 42e linear beweglich zu lagern. Die Linearlagereinheit weist hierbei einen zu der in der Figur 10 beschriebenen Linearlagereinheit 142d analogen Aufbau auf. Die Linearlagereinheit der Werkzeugmaschine 10e ist in der Werkstückauflageeinheit 12e angeordnet.

Ein Teilbereich 156e der Werkstückauflageeinheit 12e ist einstückig mit der Grundkörpereinheit 40e ausgebildet. Der einstückig mit der Grundkörpereinheit 40e ausgebildete Teilbereich 156e der Werkstückauflageeinheit 12e umfasst zwei Anschlagelemente 48e, 50e, die fest mit dem einstückig mit der Grundkörpereinheit 40e ausgebildeten Teilbereich 156e verbunden sind. Es ist jedoch auch denkbar, dass die Anschlagelemente 48e, 50e verstellbar mit dem einstückig mit der Grundkörpereinheit 40e ausgebildete Teilbereich 156e verbunden sind. Ein weiterer Teilbereich 158e der Werkstückauflageeinheit 12e, in dem die Linearlagereinheit angeordnet ist und durch den sich die Werkzeugmaschinentrennvorrichtung 14e hindurch erstreckt, ist schwenkbar relativ zur Grundkörpereinheit 40e in der Grundkörpereinheit 40e gelagert. Somit ist die Werkzeugmaschinentrennvorrichtung 14e zusammen mit der Antriebseinheit 22e und der Getriebeeinheit 42e relativ zu dem einstückig mit der Grundkörpereinheit 40e ausgebildeten Teilbereich 156e der Werkstückauflageeinheit 12e schwenkbar gelagert. Eine Schwenkachse 160e, um die der weitere Teilbereich 158e schwenkbar in der Grundkörpereinheit 40e gelagert ist, verläuft zumindest im Wesentlichen senkrecht zur Auflagefläche 20e der Werkstückauflageeinheit 12e. Somit ist die Werkzeugmaschinentrennvorrichtung 14e zusammen mit der Antriebseinheit 22e und der Getriebeeinheit 42e um die Schwenkachse 160e relativ zum einstückig mit der Grundkörpereinheit 40e ausgebildeten Teilbereich 156e der Werkstückauflageeinheit 12e schwenkbar gelagert. Der weitere Teilbereich 158e der Werkstückauflageeinheit 12e ist hierbei insgesamt um einen Winkel von 90° relativ zur Grundkörpereinheit 40e schwenkbar um die Schwenkachse 160e gelagert. Die Werkzeugmaschinentrennvorrichtung 14e kann somit ausgehend von einer Mittelstellung, in der die Schneidebene zumindest im Wesentlichen senkrecht zu einer Anschlagebene der Anschlagelemente 48e, 50e angeordnet ist, in zwei entgegengesetzt gerichtete Richtungen jeweils um einen Winkel von 45° relativ zum einstückig mit der Grundkörpereinheit 40e ausgebildeten Teilbereich 156e der Werkstückauflageeinheit geschwenkt werden. Es ist jedoch auch denkbar, dass die Werkzeugmaschinentrennvorrichtung 14e um einen anderen maximalen Winkel schwenkbar um die Schwenkachse 160e gelagert ist.

## Patentansprüche

1. Werkzeugmaschinensystem mit zumindest einer Werkzeugmaschine, die zumindest eine Werkstückauflageeinheit (12a; 12b; 12c; 12d; 12e) zur Auflage eines Werkstücks während einer Bearbeitung umfasst, und mit zumindest einer sich in zumindest einem Betriebszustand durch die Werkzeugauflageeinheit (12a; 12b; 12c; 12d; 12e) hindurch erstreckende Werkzeugmaschinentrennvorrichtung,
**wobei** die Werkzeugmaschinentrennvorrichtung zumindest einen Schneidstrang (16a; 16b; 16c; 16d; 16e) und zumindest eine Führungseinheit (18a; 18b; 18c; 18d; 18e) zur Führung des Schneidstrangs (16a; 16b; 16c; 16d; 16e) aufweist, wobei die Werkzeugmaschinentrennvorrichtung in einem montierten Zustand relativ zur Werkstückauflageeinheit (12a; 12b; 12c; 12d; 12e) schwenkbar gelagert ist, **dadurch gekennzeichnet, dass** eine Schneidebene des Schneidstrangs bei einer Schwenkbewegung der Werkzeugmaschinentrennvorrichtung ausgehend von einer Mittelstellung auf die Auflagefläche (20d; 20e) der Werkstückauflageeinheit (12a; 12b; 12c; 12d; 12e) zu bewegt wird.

2. Werkzeugmaschinensystem nach Anspruch 1,
**dadurch gekennzeichnet, dass** die Werkzeugmaschinentrennvorrichtung in einem montierten Zustand zumindest relativ zur Werkstückauflageeinheit (12b; 12c; 12d; 12e) beweglich gelagert ist.

3. Werkzeugmaschinensystem nach Anspruch 2,
**dadurch gekennzeichnet, dass** die Werkzeugmaschinentrennvorrichtung in einem montierten Zustand zumindest im Wesentlichen senkrecht zu einer Auflagefläche (20c) der Werkstückauflageeinheit (12c) beweglich gelagert ist.

4. Werkzeugmaschinensystem zumindest nach Anspruch 2,
**dadurch gekennzeichnet, dass** die Werkzeugmaschinentrennvorrichtung in einem montierten Zustand zumindest im Wesentlichen parallel zu einer Auflagefläche (20d; 20e) der Werkstückauflageeinheit (12d; 12e) beweglich gelagert ist.

5. Werkzeugmaschinensystem nach Anspruch 4,
**dadurch gekennzeichnet, dass** die Werkzeugmaschine zumindest eine Antriebseinheit (22b; 22c; 22e) umfasst, die gemeinsam mit der Werkzeugmaschinentrennvorrichtung in einem montierten Zustand zumindest relativ zur Werkstückauflageeinheit (22b; 12c; 12e) schwenkbar gelagert ist.

6. Werkzeugmaschinensystem nach einem der vorhergehenden Ansprüche, **gekennzeichnet durch** ein Drehmomentübertragungselement (24a), das zumindest teilweise in der Führungseinheit (18a) gelagert ist.

7. Werkzeugmaschinensystem nach Anspruch 6, **dadurch gekennzeichnet, dass** der Schneidstrang (16a) zumindest ein Schneidenträgerelement (26a, 28a) aufweist, das auf einer dem Drehmomentübertragungselement (24a) zugewandten Seite (30a, 32a) des Schneidenträgerelements (26a, 28a) zumindest eine Ausnehmung (34a, 36a) aufweist, in die das Drehmomentübertragungselement (24a) in zumindest einem Betriebszustand zum Antrieb des Schneidstrangs (16a) eingreift.

8. Werkzeugmaschinensystem nach einem der vorhergehenden Ansprüche, **dadurch gekennzeichnet, dass** die Schwenkachse der Werkzeugmaschinentrennvorrichtung zumindest im Wesentlichen parallel zur Auflagefläche der Werkstückauflageeinheit verläuft.

9. Werkzeugmaschinensystem nach einem der vorhergehenden Ansprüche, **dadurch gekennzeichnet, dass** die Werkzeugmaschinentrennvorrichtung ausgehend von einer Mittelstellung in zwei entgegengesetzt gerichtete Richtungen jeweils um einen Winkel größer als 15°, bevorzugt größer als 30° und besonders bevorzugt größer als 40° und weiter bevorzugt um 45° schwenkbar ist.

10. Werkzeugmaschinensystem nach einem der Ansprüche 7 bis 9, **dadurch gekennzeichnet, dass** die Schneidenträgerelemente (26a, 28a) jeweils einstückig mit einem Verbindungselement (82a, 84a) ausgebildet sind, wobei sich die Verbindungselemente (82a, 84a) an zwei Seitenwänden (94a, 96a) einer Führungsnut (64a) abstützen.

11. Werkzeugmaschinensystem nach einem der Ansprüche 1 bis 10, mit zumindest einer Werkstückauflageeinheit (12a; 12b; 12c; 12d; 12e) zur Auflage eines Werkstücks während einer Bearbeitung und mit zumindest einer Kopplungsvorrichtung (38a; 38b; 38c; 38d; 38e) zur Kopplung mit einer Werkzeugmaschinentrennvorrichtung.

## Claims

1. Power tool system having at least one power tool, which comprises at least one workpiece support unit (12a; 12b; 12c; 12d; 12e) for supporting a workpiece during machining, and having at least one power-tool parting device extending through the power tool support unit (12a; 12b; 12c; 12d; 12e) in at least one operating state,
wherein the power-tool parting device has at least one cutting strand (16a; 16b; 16c; 16d; 16e) and at least one guide unit (18a; 18b; 18c; 18d; 18e) for guiding the cutting strand (16a; 16b; 16c; 16d; 16e), wherein the power-tool parting device is mounted, in a mounted state, so as to be pivotable relative to the workpiece support unit (12a; 12b; 12c; 12d; 12e),
**characterized in that**
a cutting plane of the cutting strand is moved, during a pivoting movement of the power-tool parting device, from a central position to the support surface (20d; 20e) of the workpiece support unit (12a; 12b; 12c; 12d; 12e).

2. Power tool system according to Claim 1, **characterized in that** the power-tool parting device is mounted, in a mounted state, so as to be moveable at least relative to the workpiece support unit (12b; 12c; 12d; 12e).

3. Power tool system according to Claim 2, **characterized in that** the power-tool parting device is mounted, in a mounted state, so as to be movable at least substantially perpendicularly to a support surface (20c) of the workpiece support unit (12c).

4. Power tool system at least according to Claim 2, **characterized in that** the power-tool parting device is mounted, in a mounted state, so as to be movable at least substantially parallel to a support surface (20d; 20e) of the workpiece support unit (12d; 12e).

5. Power tool system according to Claim 4, **characterized in that** the power tool comprises at least one drive unit (22b; 22c; 22e), which, together with the power-tool parting device, is mounted, in a mounted state, so as to be pivotable at least relative to the workpiece support unit (22b; 12c; 12e).

6. Power tool system according to one of the preceding claims,
**characterized by** a torque transmission element (24a) that is mounted at least partially in the guide unit (18a).

7. Power tool system according to Claim 6, **characterized in that** the cutting strand (16a) has at least one cutter carrier element (26a, 28a) that has, on a side (30a, 32a) of the cutter carrier element (26a, 28a) facing the torque transmission element (24a), at least one recess (34a, 36a) into which the torque transmission element (24a) engages in at least one operating state in order to drive the cutting strand (16a).

8. Power tool system according to one of the preceding claims,
**characterized in that** the pivot axis of the power-tool parting device extends at least substantially parallel to the support surface of the workpiece support unit.

9. Power tool system according to one of the preceding claims,
**characterized in that** the power-tool parting device is pivotable from a central position in two opposite directions in each case through an angle of greater than 15°, preferably greater than 30° and particularly preferably greater than 40° and more preferably through 45°.

10. Power tool system according to one of Claims 7 to 9,
**characterized in that** the cutter carrier elements (26a, 28a) are each formed in one piece with a connecting element (82a, 84a), wherein the connecting elements (82a, 84a) are supported on two side walls (94a, 96a) of a guide slot (64a).

11. Power tool system according to one of Claims 1 to 10,
having at least one workpiece support unit (12a; 12b; 12c; 12d; 12e) for supporting a workpiece during machining and having at least one coupling device (38a; 38b; 38c; 38d; 38e) for coupling to a power-tool parting device.

## Revendications

1. Système de machine-outil comprenant au moins une machine-outil qui comporte au moins une unité de support de pièce (12a ; 12b ; 12c ; 12d ; 12e) servant au support d'une pièce pendant un usinage, et comprenant au moins un dispositif de séparation de machine-outil s'étendant à travers l'unité de support de machine-outil (12a ; 12b ; 12c ; 12d ; 12e) dans au moins un état de fonctionnement, dans lequel le dispositif de séparation de machine-outil comprend au moins un brin de coupe (16a ; 16b ; 16c ; 16d ; 16e) et au moins une unité de guidage (18a ; 18b ; 18c ; 18d ; 18e) servant au guidage du brin de coupe (16a ; 16b ; 16c ; 16d ; 16e), dans lequel le dispositif de séparation de machine-outil est, dans un état monté, monté pivotant par rapport à l'unité de support de pièce (12a ; 12b ; 12c ; 12d ; 12e),
**caractérisé en ce**
**qu'**un plan de coupe du brin de coupe est, lors d'un mouvement de pivotement du dispositif de séparation de machine-outil, déplacé à partir d'une position centrale vers la surface de support (20d ; 20e) de l'unité de support de pièce (12a ; 12b ; 12c ; 12d ; 12e).

2. Système de machine-outil selon la revendication 1, **caractérisé en ce que** le dispositif de séparation de machine-outil est, dans un état monté, monté mobile au moins par rapport à l'unité de support de pièce (12b ; 12c ; 12d ; 12e).

3. Système de machine-outil selon la revendication 2, **caractérisé en ce que** le dispositif de séparation de machine-outil est, dans un état monté, monté mobile au moins sensiblement perpendiculairement à une surface de support (20c) de l'unité de support de pièce (12c).

4. Système de machine-outil au moins selon la revendication 2,
**caractérisé en ce que** le dispositif de séparation de machine-outil est, dans un état monté, monté mobile au moins sensiblement parallèlement à une surface de support (20d ; 20e) de l'unité de support de pièce (12d ; 12e).

5. Système de machine-outil selon la revendication 4, **caractérisé en ce que** la machine-outil comporte au moins une unité d'entraînement (22b ; 22c ; 22e) qui est, conjointement avec le dispositif de séparation de machine-outil, montée pivotante au moins par rapport à l'unité de support de pièce (22b ; 12c ; 12e) dans un état monté.

6. Système de machine-outil selon l'une des revendications précédentes,
**caractérisé par** un élément de transmission de couple (24a) qui est monté au moins partiellement dans l'unité de guidage (18a).

7. Système de machine-outil selon la revendication 6, **caractérisé en ce que** le brin de coupe (16a) comprend au moins un élément de support de partie tranchante (26a, 28a) qui comprend, sur un côté (30a, 32a) de l'élément de support de partie tranchante (26a, 28a) tourné vers l'élément de transmission de couple (24a), au moins un évidement (34a, 36a) dans lequel vient en prise l'élément de transmission de couple (24a) dans au moins un état de fonctionnement pour l'entraînement du brin de coupe (16a).

8. Système de machine-outil selon l'une des revendications précédentes,
**caractérisé en ce que** l'axe de pivotement du dispositif de séparation de machine-outil s'étend au moins sensiblement parallèlement à la surface de support de l'unité de support de pièce.

9. Système de machine-outil selon l'une des revendications précédentes,
**caractérisé en ce que** le dispositif de séparation de machine-outil est pivotant à partir d'une position centrale dans deux sens opposés, respectivement d'un angle supérieur à 15°, de préférence supérieur à 30°, de manière particulièrement préférée supérieur à 40° et mieux encore de 45°.

10. Système de machine-outil selon l'une des revendications 7 à 9,
**caractérisé en ce que** les éléments de support de partie tranchante (26a, 28a) sont réalisés respectivement d'un seul tenant avec un élément de liaison (82a, 84a), les éléments de liaison (82a, 84a) s'appuyant contre deux parois latérales (94a, 96a) d'une rainure de guidage (64a) .

11. Système de machine-outil selon l'une des revendications 1 à 10, comprenant au moins une unité de support de pièce (12a ; 12b ; 12c ; 12d ; 12e) servant au support d'une pièce pendant un usinage et comprenant au moins un dispositif d'accouplement (38a ; 38b ; 38c ; 38d ; 38e) servant à l'accouplement à un dispositif de séparation de machine-outil.
